# EUROPÄISCHE PATENTANMELDUNG

(11) **EP 4 224 041 A1**
(43) Veröffentlichungstag der Anmeldung: **09.08.2023**
(21) Anmeldenummer: 22155333.2
(22) Anmeldetag: 07.02.2022
(51) Int. Cl.: F16J 15/34, F04D 29/00, B33Y 10/00

(54) **GLEITRING**

(71) Anmelder: Siemens Energy Global GmbH & Co. KG, 81739 München (DE)
(72) Erfinder: Jahrmarcht, Steffen, 47166 Duisburg (DE)

(57) **Zusammenfassung**

Die Erfindung betrifft einen Gleitring (1) mit einer Innenoberfläche (2), die im Betrieb einer Welle gegenüberliegend angeordnet ist, wobei die Innenoberfläche (2) mit einer Beschichtung (3) ausgebildet ist, wobei die Beschichtung (3) ein Polymer, insbesondere Polyetheretherketon (PEEK) umfasst.

## Beschreibung

Die Erfindung betrifft einen Gleitring mit einer Innenoberfläche, die im Betrieb einer Welle gegenüberliegend angeordnet ist, wobei die Innenoberfläche mit einer Beschichtung ausgebildet ist.

Des Weiteren betrifft die Erfindung ein Verfahren zur Herstellung eines Gleitringes mit einer Innenoberfläche, die im Betrieb einer Welle gegenüberliegend angeordnet ist.

Gasdichtungen sind für Strömungsmaschinen, insbesondere Verdichter, die als Turbomaschinen ausgebildet sind, bei höheren Drücken in Folge der vergleichsweise geringen Leckage die bevorzugte Dichtungsform. Beispielsweise im Vergleich zur herkömmlichen Labyrinthdichtung ermöglicht die um eine Größenordnung niedrigere Leckage der Trockengasdichtung einen signifikanten Wirkungsgradzuwachs der entsprechenden Turbomaschine.

Gegenüber den verhältnismäßig einfach aufgebauten Labyrinthdichtungen sind die modernen Trockengasdichtungen vergleichsweise anspruchsvoll hinsichtlich der Betriebsbedingungen. Ein sicherer Betrieb erfordert ein entsprechend aufbereitetes und gereinigtes Sperrgas. Weiterhin sind Trockengasdichtungen für einen sicheren Betrieb auf eine bestimmte Mindestdrehzahl angewiesen.

Bei den eingangs genannten Gasdichtungen stehen sich in der Regel ein rotierender Dichtring und ein stehender Dichtring an einer sich radial erstreckenden Dichtebene mit jeweils einer Dichtfläche an den Dichtringen gegenüber. Damit das Dichtprinzip erfolgreich umgesetzt werden kann, ist es erforderlich, dass die Dichtflächen der beiden Dichtringe präzise gearbeitet und zueinander ausgerichtet sind, so dass unter reproduzierbaren Betriebsbedingungen ein Gleitfilm des Dichtgases sich zwischen den Dichtflächen aufbaut und dementsprechend die Dichtungen berührungslos arbeiten können. Die hohen Präzisionsanforderungen unter sämtlichen denkbaren Betriebsbedingungen werden in der Regel nur mit einer besonderen Werkstoffauswahl erreicht. Der rotierende und der stehende Dichtring sind deswegen regelmäßig nicht einstückig mit dem Rotor bzw. Stator verbunden, wobei regelmäßig auch der stehende Dichtring elastisch gegen den rotierenden Dichtring verspannt ist. Der rotierende Dichtring ist an dem Rotor festgelegt, damit es nicht zu unkontrollierten Relativbewegungen insbesondere in axialer Richtung kommt. Bei herkömmlichen Dichtungsanordnungen kommt es häufig zu einem Fretting an der Axialanlage zwischen dem rotierenden Dichtring und einem entsprechenden Axialanlageabsatz des Rotors, da herkömmliche Anordnungen eine axiale Relativbewegung ermöglichen.

Die am häufigsten verbreiteten Dichtungstypen bei druckbelasteten Wellenabdichtungen sind Gleitringdichtungen. Sie sind in der Lage, Wärmedehnungen und Verschleiß selbstständig auszugleichen und haben dadurch, im Vergleich zur früher verwendeten Stopfbuchspackung, einen geringeren Wartungsaufwand. Des Weiteren haben sie eine wesentlich geringere Reibung und Leckage als die zuvor verwendeten Stopfbuchspackungen. Die Einsatzbereiche von Gleitringdichtungen reichen unter anderem von Pumpen bis Zentrifugen und Verdichtern.

Dabei erfolgt die Abdichtung zwischen einem mit der Welle verbundenen und mitrotierendem Ring und einem im Gehäuse angeordneten stationären Ring. Je nach konstruktiver Ausbildung kann die Ebene, in der sich beide Ringe berühren, der auch als Dichtspalt bezeichnet wird, parallel zur Wellenachse liegen. In diesem Fall wird solch eine Dichtung als Radialdichtung bezeichnet. In einem anderen Fall kann die Ebene senkrecht zur Wellenachse stehen. In diesem Fall wird die Dichtung als Axial-Gleitringdichtung bezeichnet.

Axial-Gleitringdichtungen bestehen aus einem Gleitring und einem Gegenring. Als Gleitring wird dabei jener Teil bezeichnet, der gegen den Dichtungspartner gedrückt wird und in der Lage ist, die axiale Position zu ändern. Er kann dabei sowohl die rotierende als auch die stationäre Komponente sein und wird in beiden Fällen trotzdem Gleitring genannt. Der Gegenring ist dementsprechend die Komponente, welche die axiale Position nicht ändern kann und den Dichtungspartner des Gleitrings darstellt.

Eine Änderung der axialen Position ist einerseits aufgrund unterschiedlicher Wärmeausdehnungen erforderlich und außerdem wegen maßänderndem Verschleiß der Dichtringe notwendig, um den Dichtspalt auf gleicher Höhe zu halten. Gleitringdichtungen bieten den Vorteil, den Verschleiß ausgleichen zu können. Die Energie zur axialen Bewegung des Gleitrings wird aus einem zuvor verformten, elastischen Element gewonnen. Es kann beispielsweise eine einfache Feder als Energiespeicher für die Axialbewegung benutzt werden. Die daraus resultierende Kraft auf den Gleitring, zuzüglich der Kraft aus dem Betriebsdruck, unter Berücksichtigung des Flächenverhältnisses, bewirkt ein Anpressen des Gleitrings gegen den Gegenring und schließt den Dichtspalt. Dieser Kraft stehen die spaltöffnenden Größen, hydrostatischer und hydrodynamischer Spaltdruck gegenüber. Bei einer stehenden Welle werden die Dichtkörper durch die Vorspannung der elastischen Elemente aneinander gedrückt und der Dichtspalt verschlossen. Im Betrieb hingegen trennen sich im günstigen Fall bei sorgfältiger Auslegung und Fertigung die Dichtflächen vollständig voneinander und es stellt sich ein tragender Dichtspalt aus dem abzudichtenden Medium von unter 1 µm ein. Wegen der komplexen tribologischen Effekte ergeben sich besondere Anforderungen an die Werkstoffe der eigentlichen Gleit- und Gegenringe. Der Umstand, dass Gleitringdichtungen meist in aggressiven Medien eingesetzt werden, erhöht die Anforderungen an die Werkstoffe weiter.

Die Gleitringe sollten eine gute Wärmeleitfähigkeit aufweisen, um die Wärme abführen zu können und außerdem temperaturschockbeständig sein, um nicht infolge starker Temperaturschwankungen beschädigt zu werden.

Es ist üblich die Gleitringe, die in manchen Ausführungsformen auch als Schwimmringe bezeichnet werden, mit einer Weißmetall-Babbitt-Beschichtung zu versehen, um Trockenlaufeigenschaften zu gewährleisten und Schäden an der Welle bei Kollisionen zu vermeiden. Diese Weißmetall-Babbitt-Beschichtung unterliegt der Korrosion, wodurch sie in der Folge beschädigt werden und ihren Zweck nicht mehr erfüllen kann. Besonders bei Kompressoranwendungen mit einem Schwefelwasserstoff-Gehalt (H₂S) kann es auf Grund des Kupferanteils in der Legierung zu einer starken Korrosion kommen. Dies führt unter anderem zu einer höheren Leckage, einem geringeren Wirkungsgrad, einer geringeren Maschinenlaufzeit und einem höheren Ersatzbedarf.

Die Erfindung hat es sich ausgehend von den bekannten Problemen und Nachteilen des Standes der Technik zur Aufgabe gemacht einen Gleitring anzugeben, mit dem verbesserte Gleitringeigenschaften erzielt werden können.

Des Weiteren ist es Aufgabe der Erfindung, ein Verfahren zur Herstellung eines verbesserten Gleitrings anzugeben.

Die auf die Vorrichtung hin gerichtete Aufgabe wird gelöst durch einen Gleitring mit einer Innenoberfläche, die im Betrieb einer Welle gegenüberliegend angeordnet ist, wobei die Innenoberfläche mit einer Beschichtung ausgebildet ist, wobei die Beschichtung ein Material aus Polymer umfasst.

Die vom Patentanspruch 1 abhängigen und rückbezogenen Unteransprüche betreffen vorteilhafte Weiterbildungen der Erfindung.

Die auf das Verfahren hin gerichtete Aufgabe wird durch ein Verfahren zur Herstellung eines Gleitringes mit einer Innenoberfläche, die im Betrieb einer Welle gegenüberliegend angeordnet ist, wobei auf der Innenoberfläche eine poröse Struktur aufgebracht wird, wobei in die poröse Struktur geschmolzenes Material aus Polymer eingebracht wird, wobei auf die mit geschmolzenen Polymer ausgebildete poröse Struktur eine Schicht aus Polymer aufgebracht wird.

Die vom Patentanspruch 13 abhängigen und rückbezogenen Unteransprüche betreffen vorteilhafte Weiterbildungen der Erfindung.

Ein wesentliches Merkmal der Erfindung ist es daher, die Weißmetall-Babbittbeschichtung durch eine Polymerbeschichtung zu ersetzen. Hierzu wird ein Polymer verwendet, da diese eine hervorragende Korrosionsbeständigkeit, mechanische Eigenschaften, Verschleißfestigkeit und Eignung für hohe Temperaturen aufweist.

Insbesondere wird der thermoplastische Kunststoff Polyetheretherketon (abgekürzt: PEEK) verwendet, da dieser eine besonders hervorragende Korrosionsbeständigkeit, mechanische Eigenschaften, Verschleißfestigkeit und Eignung für hohe Temperaturen aufweist.

Weitere geeignete Polymere sind Polyaryletherketone (PAEK) zu denen Polyetherketoneketone (PEKK) und das besonders gute geeignete Polyetheretherketone (PEEK) gehören, Polyhalogenolefine zu denen das Polytetrafluorethylen (PTFE) gehört, Polyamidimid (PAI), Polyphenylensulfid (PPS), Ethylene Chlorotrifluoroethylene (ECTFE) sowie Polymid (PI).

Allerdings ist die Wärmeausdehnung der Polymere, insbesondere von Polyetheretherketon (PEEK) im Vergleich zum Substrat, zum Beispiel Stahl sehr unterschiedlich. Dies würde zu einer Delaminierung der Beschichtung führen, da sie beim Abkühlen schrumpft. Um dies zu vermeiden, wird auf der Innenoberfläche des Gleitringes erfindungsgemäß eine poröse Struktur aufgebracht. In diese Struktur, die Hohlräume aufweist, wird das Polymer, insbesondere Polyetheretherketon (PEEK) beim Beschichtungsprozess eingeschmolzen, was zu einer festen formschlüssigen Verbindung von Substrat und Beschichtung führt.

Auf die somit erhaltene Oberfläche werden mehrere Schichten einer reinen Beschichtung aus Polymer, insbesondere Polyetheretherketon (PEEK) aufgetragen. Dadurch entsteht ein Gradienten-Materialübergang.

Polyetheretherketon ist ein hochtemperaturbeständiger thermoplastischer Kunststoff und gehört zur Stoffgruppe der Polyeryletherketone. Seine Schmelztemperatur beträgt 335 °C.

Polyetheretherketon (PEEK) ist ein teilkristalliner, thermoplastischer Kunststoff. Es zeigt auch unter thermischer Belastung hervorragende Gleiteigenschaften in Verbindung mit sehr guten mechanischen Eigenschaften.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:

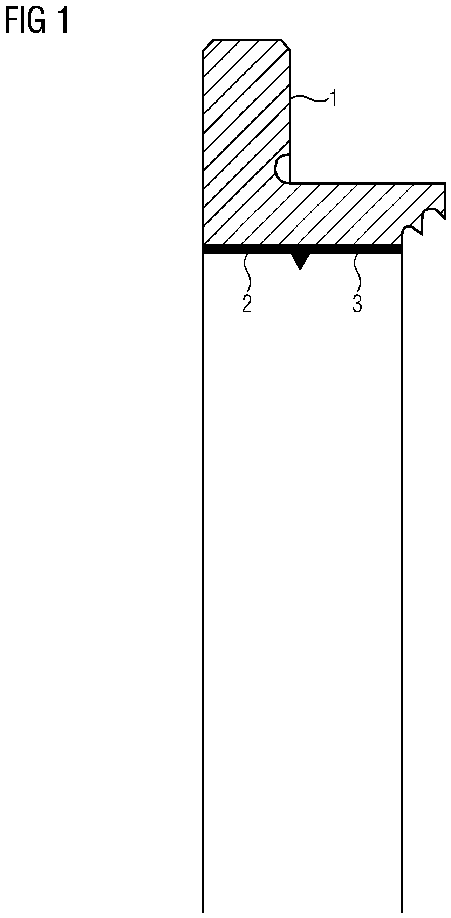

- Figur 1: eine schematische Darstellung eines Gleitringes der Verdichtungsanordnung

Die Figur 1 zeigt eine schematische Darstellung eines erfindungsgemäßen Gleitringes 1. Die Funktionsweise eines Gleitringes 1 in einer Dichtung ist hinreichend bekannt. Daher wird auf die Beschreibung der Funktionsweise eines Gleitringes 1 als Teil einer Dichtung an dieser Stelle verzichtet.

Der Gleitring 1 ist um eine Rotationsachse (nicht dargestellt) kreisförmig ausgebildet. Im Betrieb ist an einer Innenoberfläche 2 des Gleitringes 1 eine Welle angeordnet. Die Welle rotiert im Betrieb mit hohen Drehzahlen. Damit der Schaden bei einer ungewollten Berührung zwischen der Welle und des Gleitringes 1 minimiert ist, wird die Innenoberfläche mit einer Beschichtung 3 ausgebildet.

Diese Beschichtung 3 umfasst ein Polymer. Insbesondere ist die Beschichtung aus Polyetheretherketon ausgebildet. Polyetheretherketon ist ein hochtemperaturbeständiger thermoplastischer Kunststoff und gehört zur Stoffgruppe der Polyeryletherketone. Seine Schmelztemperatur beträgt 335 °C.

Polyetheretherketon (abgekürzt PEEK) ist ein teilkristalliner, thermoplastischer Kunststoff. Es zeigt auch unter thermischer Belastung hervorragende Gleiteigenschaften in Verbindung mit sehr guten mechanischen Eigenschaften.

Weitere geeignete Polymere sind Polyaryletherketone (PAEK) zu denen Polyetherketoneketone (PEKK) und das besonders gute geeignete Polyetheretherketone (PEEK) gehören, Polyhalogenolefine zu denen das Polytetrafluorethylen (PTFE) gehört, Polyamidimid (PAI), Polyphenylensulfid (PPS), Ethylene Chlorotrifluoroethylene (ECTFE) sowie Polymid (PI).

Der Gleitring 1 wird hierbei über seinen gesamten Umfang hinweg an der Innenoberfläche 2 mit der Beschichtung 3 aus Polyetheretherketon ausgebildet.

Der Gleitring 1 kommt besonders dort zum Einsatz, wo hohe Drehzahlen der Welle auftreten, wie zum Beispiel in Turbomaschinen, insbesondere in Verdichtern oder Turbokompressoren.

Die Herstellung des Gleitringes 1 erfolgt wie nachfolgend beschrieben. Auf die Innenoberfläche 2 des Gleitringes 1 wird eine poröse Struktur aufgebracht. Die poröse Struktur umfasst Hohlräume. Die Herstellung dieser porösen Struktur kann durch eine additive Fertigungsmethode erfolgen.

In einem nächsten Schritt wird in die poröse Struktur geschmolzenes Polymer, insbesondere Polyetheretherketon (PEEK) eingebracht. Mit anderen Worten: in die Hohlräume wird geschmolzenes Polymer, insbesondere Polyetheretherketon (PEEK) eingebracht. Dies führt zu einer festen formschlüssigen Verbindung von Substrat und Beschichtung. Dadurch entsteht ein Grundmaterial mit einer Oberfläche mit besonderen Oberflächeneigenschaften.

In einem nächsten Schritt wird auf die Oberfläche eine Schicht aus Polymer, insbesondere Polyetheretherketon (PEEK), insbesondere reinem Polyetheretherketon (PEEK) aufgebracht.

Auf die somit erhaltene Oberfläche werden mehrere Schichten einer reinen Beschichtung aus Polyetheretherketon (PEEK) aufgetragen. Dadurch entsteht ein Gradienten-Materialübergang.

## Patentansprüche

1. Gleitring (1)
mit einer Innenoberfläche (2), die im Betrieb einer Welle gegenüberliegend angeordnet ist,
wobei die Innenoberfläche (2) mit einer Beschichtung (3) ausgebildet ist,
**dadurch gekennzeichnet, dass**
die Beschichtung (3) ein Material aus Polymer umfasst.

2. Gleitring (1) nach Anspruch 1,
**dadurch gekennzeichnet, dass**
die Beschichtung (3) Polyaryletherketone (PAEK) umfasst.

3. Gleitring (1) nach Anspruch 1 oder 2,
**dadurch gekennzeichnet, dass**
die Beschichtung (3) Polyetheretherketone (PEEK) umfasst.

4. Gleitring (1) nach einem der vorhergehenden Ansprüche,
**dadurch gekennzeichnet, dass**
die Beschichtung (3) Polyetherketoneketone (PEKK) umfasst.

5. Gleitring (1) nach einem der vorhergehenden Ansprüche,
**dadurch gekennzeichnet, dass**
die Beschichtung (3) Polyhalogenolefine umfasst.

6. Gleitring (1) nach Anspruch 5,
**dadurch gekennzeichnet, dass**
die Beschichtung (3) Polytetrafluorethylen (PTFE) umfasst.

7. Gleitring (1) nach einem der vorhergehenden Ansprüche,
**dadurch gekennzeichnet, dass**
die Beschichtung (3) Polyamidimid (PAI) umfasst.

8. Gleitring (1) nach einem der vorhergehenden Ansprüche,
**dadurch gekennzeichnet, dass**
die Beschichtung (3) Polyphenylensulfid (PPS) umfasst.

9. Gleitring (1) nach einem der vorhergehenden Ansprüche,
**dadurch gekennzeichnet, dass**
die Beschichtung (3) Ethylene Chlorotrifluoroethylene (ECTFE) umfasst.

10. Gleitring (1) nach einem der vorhergehenden Ansprüche,
**dadurch gekennzeichnet, dass**
die Beschichtung (3) Polyimid (PI) umfasst.

11. Gleitring (1) nach Anspruch 1,
wobei die Innenoberfläche (2) einen Umfang bildend kreisförmig ausgebildet ist und das Polymer vollständig auf dem Umfang angeordnet ist.

12. Gleitring (1) nach Anspruch 1 oder 2,
wobei der Gleitring (1) zum Einsatz in einer Turbomaschine, insbesondere einem Verdichter oder Turbokompressor ausgebildet ist.

13. Verfahren zur Herstellung einer Gleitringes (1) mit einer Innenoberfläche (2), die im Betrieb einer Welle gegenüberliegend angeordnet ist,
wobei auf der Innenoberfläche (2) eine poröse Struktur aufgebracht wird,
wobei in die poröse Struktur geschmolzenes Polymer eingebracht wird,
wobei auf die mit geschmolzenen Polymer ausgebildete poröse Struktur eine Schicht aus Polymer aufgebracht wird.

14. Verfahren zur Herstellung einer Gleitringes (1) mit einer Innenoberfläche (2), die im Betrieb einer Welle gegenüberliegend angeordnet ist,
wobei auf der Innenoberfläche (2) eine poröse Struktur aufgebracht wird,
wobei in die poröse Struktur geschmolzenes Polyetheretherketon eingebracht wird,
wobei auf die mit geschmolzenen Polyetheretherketon ausgebildete poröse Struktur eine Schicht aus Polyetheretherketon aufgebracht wird.

15. Verfahren zur Herstellung nach Anspruch 13 oder 14, wobei die poröse Struktur durch ein additives Fertigungsverfahren erfolgt.

16. Verfahren zur Herstellung nach einem der Ansprüche 13 bis 15,
wobei auf die Schicht aus Polymer eine weitere Schicht aus Polymer aufgebracht wird.

17. Verfahren zur Herstellung nach einem der Ansprüche 13 bis 16,
wobei auf die Schicht aus Polyetheretherketon eine weitere Schicht aus Polyetheretherketon aufgebracht wird.
